(19) Europäisches Patentamt
European Patent Office
Office européen des brevets

(11) Veröffentlichungsnummer: **0 016 312**
**A1**

(12) # EUROPÄISCHE PATENTANMELDUNG

(21) Anmeldenummer: 80100301.3

(22) Anmeldetag: 22.01.80

(51) Int. Cl.$^3$: **C 08 F 10/10**
C 08 F 4/14, C 08 F 240/00
C 08 F 8/32, C 08 F 8/46
C 10 M 1/36

(30) Priorität: 05.02.79 DE 2904314

(43) Veröffentlichungstag der Anmeldung:
01.10.80 Patentblatt 80/20

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Boerzel, Paul, Dr.
Hans-Purrmann-Strasse 9 B
D-6710 Frankenthal(DE)

(72) Erfinder: Bronstert, Klaus, Dr.
Gartenstrasse 26
D-6719 Carlsberg 1(DE)

(72) Erfinder: Hovemann, Friedrich, Dr.
Magdeburger Strasse 7
D-6832 Hockenheim(DE)

(72) Erfinder: Sandrock, Gerhard, Dr.
Albrecht-Duerer-Ring 36C
D-6710 Frankenthal(DE)

(72) Erfinder: Strohmeyer, Max, Dr.
Woogstrasse 41
D-6703 Limburgerhof(DE)

(54) **Verfahren zur Herstellung von Polyisobutenen und Verwendung derselben zur Herstellung von Mineralölhilfsmitteln.**

(57) Polyisobutenen mit einem mittleren Polymerisationsgrad von P = 10-100 und einem Anteil E = 60 bis 100 % an Doppelbindungen, die mit Maleinsäureanhydrid umsetzbar sind, wobei E = 100 % dem rechnerisch-theoretischen Wert für den Fall entspricht, daß jedes Molekül des Polyisobutens eine derartige Doppelbindung aufweist, durch Polymerisation von Isobuten mit 1 bis 20 mmol Bortrifluorid pro Mol Isobuten, indem man die Polymerisation bei (-50) bis (+80)°C vornimmt und die mittlere Polymerisationsdauer auf 1 bis 40 Sekunden begrenzt, sowie deren Verwendung zur Herstellung von Mineralöl-Hilfsmitteln.

EP 0 016 312 A1

Croydon Printing Company Ltd.

BEZEICHNUNG GEÄNDERT
siehe Titelseite

Verfahren zur Herstellung von Polyisobutenen

Die vorliegende Erfindung betrifft ein verbessertes Verfahren zur Herstellung von Polyisobutenen.

Aus der DE-OS 27 02 604 sind Polyisobutene des mittleren Polymerisationsgrades P = 10 bis 100 bekannt, die einen Anteil E = 60 bis 90 % an Doppelbindungen enthalten, welche mit Maleinsäureanhydrid umsetzbar sind, wobei E = 100 % dem rechnerisch-theoretischen Wert für den Fall entspräche, daß jedes Molekül des Polyisobutens eine derartige reaktive Doppelbindung aufwiese.

Wegen ihres hohen Gehaltes an reaktionsfähigen Doppelbindungen sind diese Polyisobutene wertvolle Vorprodukte für die Herstellung von Mineralölhilfsmitteln, die man durch Umsetzung mit Maleinsäureanhydrid und nachfolgende Reaktion mit einem Amin oder Polyamin erhält.

Nach dem Verfahren der genannten DE-OS sind die definitionsgemäßen Polyisobutene durch Polymerisation von Isobuten mit Hilfe von Bortrifluorid als Polymerisationsinitiator erhältlich, indem man die Polymerisation bei (-50) bis (+30)$^{\circ}$C vornimmt, hierbei auf 1 Mol Isobuten 1 bis 20 mmol Bortrifluorid verwendet und die mittlere Polymerisationsdauer auf 1 bis 10 Minuten begrenzt.

Der vorliegenden Erfindung lag die Aufgabe zugrunde, dieses Verfahren leistungsfähiger zu machen.

Es wurde gefunden, daß man Polyisobutene mit einem mittleren Polymerisationsgrad von P = 10-100 und einem Anteil E = 60 bis 100 % an Doppelbindungen, die mit Maleinsäureanhydrid umsetzbar sind, wobei E = 100 % dem rechnerisch-

Mi/BL

theoretischen Wert für den Fall entspricht, daß jedes Molekül des Polyisobutens eine derartige Doppelbindung aufweist, durch Polymerisation von Isobuten mit 1 bis 20 mmol Bortrifluorid pro Mol Isobuten auf wirtschaftliche Weise erhält, wenn man die Polymerisation bei (-50) bis (+80)°C vornimmt und die mittlere Polymerisationsdauer auf 1 bis 40 Sekunden begrenzt.

Es wurde weiterhin gefunden, daß sich dieses Verfahren technisch besonders gut realisieren läßt, wenn man es unter turbulenter Strömung der Reaktionspartner kontinuierlich in einem Rohrreaktor vornimmt und wenn die mittlere Strömungsgeschwindigkeit 0,5-20 m/sec beträgt.

Aus der letztgenannten Maßgabe sowie aus der angegebenen Polymerisationsdauer ergibt sich, daß der Rohrreaktor eine Länge von 0,5 bis 800 m hat. Da die Polymerisation stark exotherm ist und deshalb für eine wirksame Kühlung gesorgt werden muß, empfiehlt es sich wegen der besseren Wärmeabführung, die Polymerisation in relativ dünnen Rohren mit Innendurchmessern von 0,1 bis 10 cm vorzunehmen. Aus praktischen Gründen ist es ferner zweckmäßig, das Rohr spiralig aufzuwendeln und diese Rohrspirale in einem Kühlbad anzuordnen. Anstelle der Spiralform sind selbstverständlich auch andere Raumformen der Rohranordnung geeignet. Außerdem kann statt eines einzelnen Rohres zur Vergrößerung der Wärmeaustauschflächen ein Rohrbündel verwendet werden.

Druck und Temperatur wählt man zweckmäßigerweise so, daß die Polymerisation weitgehend in der Flüssigphase stattfindet, also für den angegebenen Temperaturbereich von (-50)-(+80)°C bei einem Druck von 1-15 bar am Rohrende, wobei für die niedrige Temperatur der geringere Druck und für die höhere Temperatur der höhere Druck gilt. Eine

streng isotherme Temperaturführung ist jedoch nicht erforderlich. Da besonders am Anfang der Polymerisationsstrecke größere Wärmemengen frei werden, die durch die Kühlvorrichtung nicht restlos abgeführt werden und auch nicht restlos abgeführt zu werden brauchen, kann sich die Temperatur im Inneren des Rohres hier soweit erhöhen, daß sich eine Gasphase ausbildet. Hierdurch wird das gute Gelingen des Verfahrens jedoch nicht beeinträchtigt.

Das erfindungsgemäße Verfahren beruht auf der Beobachtung, daß die Polymerisation bereits nach wenigen Sekunden größtenteils abgelaufen ist und daß sich in den angegebenen kurzen Polymerisationszeiten der durch das Bortrifluorid bedingte Isomerisierungseffekt, durch welche die Doppelbindungen in das Innere des Moleküls wandern und dann für die Umsetzung mit Maleinsäureanhydrid nicht mehr reaktiv genug sind, weitgehend unterdrückt wird. Im Vergleich zu den bekannten Polymerisationszeiten von einigen Minuten bewirken die erfindungsgemäßen Polymerisationszeiten eine Erhöhung des Anteils E um etwa 5 bis 10 Prozentpunkte, so daß auch der Wert 100 % praktisch erreicht werden kann.

Die eingangs definierte Kennzahl E ist in einfacher Weise und im Hinblick auf die Weiterverwendung der Polyisobutene am zuverlässigsten unmittelbar aus der Säurezahl des betreffenden Polyisobuten/Maleinsäureanhydrid-Adduktes zu ermitteln.

Die Polymerisation kann auch in der für die kationische Polymerisation an sich bekannten Weise durch Mitverwendung von Cokatalysatoren wie Wasser oder Alkoholen beschleunigt werden. Die Menge dieser Verbindungen beträgt 0,2 bis höchstens 1,0 Molprozent, bezogen auf die Menge des Bortrifluorids.

In allen Fällen nimmt man die Polymerisation als solche durch Einleiten von gasförmigem Bortrifluorid und gegebenenfalls Zuführung des Cokatalysators in das auf eine Temperatur von (-50) bis (+80)°C gebrachte Isobuten unter guter Kühlung vorzugsweise auf die oben beschriebene kontinuierliche Arbeitsweise in einem Rohrreaktor vor. Das Bortrifluorid wird hierbei zweckmäßigerweise am Anfang der Polymerisationsstrecke durch eine Düse in den Isobutenstrom injiziert.

Den Abbruch der Polymerisation bewirkt man dann in ebenfalls bekannter Weise durch Zugabe von Wasser, Alkoholen wie Methanol oder wäßrigen oder alkoholischen Laugen. Die Katalysatorreste werden sodann abfiltriert, an Adsorbentien, z.B. Aluminiumoxid adsorbiert oder mit Wasser oder Alkohol extrahiert. Lösungsmittel, Monomere und niedermolekulare Oligomere entfernt man zweckmäßigerweise durch Flashdestillation.

Wie stets bei derartigen Polymerisationen erhält man Isomere mit einem bestimmten Polymerisationsgradspektrum. Die Streuung indes ist im Hinblick auf die Eigenschaften der aminierten Polyisobuten/Maleinsäureanhydrid-Addukte ohne erkennbaren Einfluß, so daß es nur auf den mittleren Polymerisationsgrad P ankommt, der z.B. durch Viskositätsmessungen auch während der Polymerisation laufend ermittelt und gesteuert werden kann. Innerhalb des angegebenen Bereiches werden Polymere mit P = 10 bis 40 bevorzugt.

Unter dem Begriff Polyisobutene sind im Rahmen dieser Erfindung nicht nur die Homopolymerisate des Isobutens, sondern auch dessen Copolymerisate mit mindestens 80 % Isobutenanteil zu verstehen. Als Comonomere kommen in erster Linie die übrigen olefinisch ungesättigten $C_4$-

Kohlenwasserstoffe in Betracht, so daß man, was von besonderer technischer Bedeutung ist, unmittelbar von den sogenannten $C_4$-Schnitten ausgehen kann. Diese enthalten neben 10 bis 15 % Butan, 40 bis 55 % Butenen und bis zu 1 % Butadien zwar nur 30 bis 50 % Isobuten, jedoch bedingt die weitgehend selektive Polymerisation des Isobutens, daß die übrigen Monomeren unter den Polymerisationsbedingungen nur zu etwa 2 bis 20 % in das Polymere eingebaut werden. Die Monomeren, die nicht reagiert haben, können für andere Zwecke verwendet werden.

Zur Herstellung der Mineralölhilfsmittel setzt man das Polyisobuten in bekannter Weise bei 170 bis 250°C mit der stöchiometrischen oder einer leicht überschüssigen Menge Maleinsäureanhydrid um.

Diese Addukte werden ihrerseits mit Aminen, vor allem Polyaminen der allgemeinen Formel

$$H_2N-(R'-NH-)_m-R-(NH-R')_n-NH_2,$$

in der R und R' für Alkylengruppen mit 2-4 C-Atomen und m und n für die Werte 1-5 stehen, in an sich bekannter Weise in die Schmieröladditive überführt. Beispiele für derartige Polyamine sind Diäthylentriamin und Triäthylentetramin.

Das erfindungsgemäße Verfahren gestattet wie dargelegt die Herstellung qualitativ verbesserter Polyisobutene in kürzeren Reaktionszeiten als bisher.

Beispiel

Durch einen spiralig aufgewendelten Rohrreaktor von 11 mm Innendurchmesser und 40 m Länge, aus welchem das Produkt auch schon nach 20 m entnommen werden kann, wurde pro Stunde 220 kg eines $C_4$-Schnittes folgender Zusammensetzung (jeweils Gewichtsprozent)

45 % Isobuten
28 % But-1-en
6 % cis-But-2-en
10 % trans-But-2-en
0,2 % Butadien
10 % Butane

sowie 900 g (= 7,5 mmol/mol Isobuten) $BF_3$ geleitet. Dies entspricht einer Störmungsgeschwindigkeit von etwa 11 m/sec.

Das Rohr befand sich in einem Kühlbad aus siedendem Ammoniak, dessen Temperatur 15°C betrug. Die Polymerisation wurde unter einem Druck von 3,5 bar vorgenommen. Am Anfang der Polymerisationsstrecke herrschte im Innern des Rohres eine Temperatur von 35-40°C; nach 25 m fiel die Temperatur praktisch auf die Badtemperatur ab.

Das Reaktionsgemisch wurde sodann wie üblich aufgearbeitet.

Die Ergebnisse bei verschiedener Polymerisationsdauer sind folgender Tabelle zu entnehmen:

| | Reaktorlänge 20 m | Reaktorlänge 40 m |
|---|---|---|
| Polymerisationsdauer, sec | 18 | 36 |
| Umsatz an Isobuten, in % | 100 | 100 |
| Ausbeute an Polymeren nach Abtrenung aller bei 2 mbar bis 200°C siedender Bestandteile, in % des Isobuten | 68 | 70 |
| mittlerer Polymerisationsgrad P (über das osmometrisch ermittelte mittlere Molekulargewicht errechnet) | 18 | 17 |
| Anteil E an reaktiven Doppelbindungen, in % (über die Säurezahl des Maleinsäureanhydrid-Addukts ermittelt) | 91 | 82 |

## Patentansprüche

1. Verfahren zur Herstellung von Polyisobutenen mit einem mittleren Polymerisationsgrad von P = 10-100 und einem Anteil E = 60 bis 100 % an Doppelbindungen, die mit Maleinsäureanhydrid umsetzbar sind, wobei E = 100 % dem rechnerisch-theoretischen Wert für den Fall entspricht, daß jedes Molekül des Polyisobutens eine derartige Doppelbindung aufweist, durch Polymerisation von Isobuten mit 1 bis 20 mmol Bortrifluorid pro Mol Isobuten, dadurch gekennzeichnet, daß man die Polymerisation bei (-50) bis (+80)°C vornimmt und die mittlere Polymerisationsdauer auf 1 bis 40 Sekunden begrenzt.

2. Verfahren nach Anspruch 1, dadurch gekennzeichnet, daß man die Polymerisation unter turbulenter Strömung der Reaktionspartner kontinuierlich in einem Rohrreaktor vornimmt und daß die mittlere Strömungsgeschwindigkeit der Teilchen hierbei 0,5-20 m/sec beträgt.

3. Verfahren nach den Ansprüchen 1 und 2, dadurch gekennzeichnet, daß man neben dem Bortrifluorid Cokatalysatoren mitverwendet, wie sie für die kationische Polymerisation an sich bekannt sind.

4. Verfahren nach den Ansprüchen 1 bis 3, dadurch gekennzeichnet, daß man anstelle von reinem Isobuten $C_4$-Schnitte mit einem Gehalt von mindestens 30 Gewichtsprozent Isobuten einsetzt.

5. Verwendung der Polyisobutene gemäß den Ansprüchen 1 bis 4 zur Herstellung von Mineralölhilfsmitteln, indem man sie in an sich bekannter Weise mit Maleinsäureanhydrid und anschließend mit Aminen der Formel

$$H_2N-(R'-NH)_m-R-(NH-R')_n-NH_2,$$

wobei R und R' für Alkylengruppen mit 2-4 C-Atomen und m und n für die Werte 1-5 stehen, umsetzt.

0016312

Europäisches Patentamt

# EUROPÄISCHER RECHERCHENBERICHT

Nummer der Anmeldung
EP 80 10 0301

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| D | DE - A - 2 702 604 (BASF)<br>* Ansprüche 1-6 *<br>--<br>FR - A - 1 175 704 (BASF)<br>* Zusammenfassung 1; Beispiele *<br>---- | 1,3-5<br><br><br>1,3 | C 08 F 10/10<br>4/14<br>240/00<br>8/32<br>8/46<br>C 10 M 1/36 |

RECHERCHIERTE SACHGEBIETE (Int. Cl. 3)

C 08 F 10/08
10/10
110/08
110/10
210/08
210/10
4/12
4/14
240/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 10-06-1980 | PERMENTIER |